# EUROPEAN PATENT APPLICATION

(11) **EP 0 926 874 A1**
(43) Date of publication of application: **30.06.1999**
(21) Application number: 97204105.7
(22) Date of filing: 24.12.1997
(51) Int. Cl.: H04M 15/00

(54) **Call charging in a telecommunications system**

(71) Applicant: TELEFONAKTIEBOLAGET L M ERICSSON (publ), 126 25 Stockholm (SE)
(72) Inventor: De Bruijn, Franck, 6413 CT Heerlen (NL)
(74) Representative: Dohmen, Johannes Maria Gerardus

(57) **Abstract**

A method of and equipment for charging calls in a telecommunications system (1) providing wired and/or wireless telecommunication services (2; 3). Signalling information (40) identifying a calling and called party is processed for call charging purposes (41, 42). The signalling information is processed for charging rates applicable at the time of and using such system resources required for establishing the call. The call is charged (45) following one of the applicable charging rates (43). Users of the telecommunications system may be provided with a charging rate right, wherein the call is set up (44) and charged (45) by applying an applicable charging rate selected (43) in accordance with such charging rate right.

## Description

### Field of the Invention

The present invention relates to call charging in a telecommunications system and, more particularly, to a method of and a telecommunications system for charging calls at a charging rate to be determined.

### Background of the Invention

Traditionally, calls in a telecommunications system are charged to the account of the calling party. Several charging rates can be applied, dependent on the distance of the call, i.e. regional, national and international charging rates and, for example, the time of the day e.g. busy hour and off-busy hour charging rates.

Reverse charging, that is the called party bears the costs for the call, is made possible by a service called "collect-call". Through a telephone operator, the called party can agree to collect the charges for the call.

With the liberation of telecommunication services and the introduction of wireless telecommunications, not only the number of service providers has been increased but also the number and types of rates for charging calls between parties.

For example, dependent on the number of calls, i.e. the communication time spent, operators of mobile telecommunication networks offer lower costs per time unit (i.e. per second or per minute) or higher charging rates against lower subscription fees, for example.

International calls are generally exchanged through international and/or global carriers, which offer lower charging rates for high volume traffic.

A local network operator may take advantage therefrom, by offering subscriptions such as low international call charges compared against higher local charging rates or, visa versa, low local charging rates against more expensive international call charges. Those skilled in the art will appreciate that a variety of subscriptions and charging rates can be offered and used as a competitive instrument between telecommunications service providers.

### Summary of the invention

It is an object of the present invention to provide subscribers with the possibility of taking advantage of charging rates applicable to a call and/or to offer telecommunications service providers, i.e. telecommunications network operators, a tool for providing competitive call charging rates. This, in order to prevent customers from changing operator, and/or to generate more revenues from higher traffic volumes.

These and other objects and advantages are achieved in the present invention through a method of charging calls in a telecommunications system providing wired and/or wireless telecommunication services, wherein signalling information is provided identifying a calling and called party, and wherein the signalling information is processed for call charging purposes, characterized in that the signalling information is processed for charging rates applicable at the time of and using such system resources required for establishing the call, and wherein the call is charged following one of the applicable charging rates.

In the present invention, the actual charging of a call is made dependent on charging rates which are applicable if such call would be handled by other operators, other networks, other international and global carriers, if applicable, different call directions etc., provided the same or equivalent resources are used and at the same time of placing the call. This can be best explained in some examples.

Assume a company having 10 employees, each provided with an own mobile telephone. With its telephone network operator, the company has concluded a subscription such that during office hours calls can be placed against a low charging rate. However, outside office hours the charging rate is more expensive.

If, in such a case, an employee has to call his company outside office hours, the call can be pretty costly. However, with the method according to the invention, if the call charging rate for a telephone call from the company to the mobile phone of the employee is less expensive, because the normal charging rate for calling a mobile phone applies, a telecommunications service provider or network operator may offer to charge the call against the rate as if the call was placed from the company to the employee.

As an other example, assume an international call. A first party having a subscription with a first network operator under the condition of low rate local calls and expensive charging rates for international calls. A second party has a subscription with the same network operator, which provides for low international charging rates and more expensive local calls.

In accordance with a further embodiment of the present invention, the network operator or communications service provider may offer to charge the least expensive charging rate applicable. In the above case, the calling rate from the second to the first party.

With the present invention, however, the network operator may also offer to charge this call against a charging rate which would be charged by an other operator in the service area of the first party, if such charging rate is lower and provided equivalent system resources will be used (e.g. the same quality) and at the same time of the day.

Those skilled in the art will appreciate that there are many other examples in which several calling rates can be applicable to a telephone call, not only on the basis of special subscriptions or competitive network operators, but also due to time-zone differences in case of international calls. That is, a call placed from one country to another may be charged for busy hour tariff, whereas if the same call was placed from the other country off-busy hour rates would be applicable. In such a case it can be offered to charge calls between international subsidiaries of a company against the lower off-busy hour charging rate.

Preferably, a network operator will offer this flexible charging method as a novel service, available on a subscription basis, for example.

In a further embodiment of the invention, a so-called "charging rate right" can be offered. Such that, if a user of the telecommunications system is provided with a charging rate right, the call is charged by applying a charging rate selected in accordance with the charging rate right.

In the embodiments described above, it is assumed that the network operator or communications service provider applies a particular charging rate without actually adapting the network resources to the charging rate applied. For example, if a call from a called party to a calling party is less expensive, than the communication path i.e. the system resources used, will actually not be changed.

However, the method according to the invention, in a further embodiment thereof, provides also for establishing a call using the system resources corresponding to the charging rate to be applied.

That is, if a call from the called party to the calling party is less expensive, the call will be set up from the called party rather than from the initially calling party. If the parties themselves have an agreement as to the costs of calls, it is even not necessary to adapt the charging rates by the network operator. Charging can be applied following the well-known procedure in that the called party bears the costs.

The selection of system resources can be implemented in exchange equipment of the communications system or, alternatively, in the Private Automatic Branch eXchange (PABX) or other equipment of the user or subscriber.

The charging rate information, in a yet further embodiment of the method according to the invention, is made available from charging data base equipment of the telecommunications systems i.e. the wired and/or wireless networks involved.

In a still further embodiment of the method according to the invention, the charging rates, at least partly, can be made available from charging data base equipment of one or both the calling and called party.

In a preferred embodiment of the method according to the invention, the charging rates are acquired and processed through signalling and processing resources provided by the telecommunications system. This puts the least requirements on subscribers, which can benefit from the novel and inventive charging method according to the invention without having to change or adapt their communication equipment.

In an efficient embodiment of the method according to the invention, a call is set up after the charging rate to be applied has been selected. This to avoid occupation of scarce resources. During the processing of the signalling information for charging information, the telecommunication system may provide the same signalling tones and the like as with a "normal" call set up. Accordingly, callers do not have to experience the selection of charging rates and/or an actual selection of system resources if a call is set up from the called party, for example.

The invention further provides for a telecommunications system, comprising wired and/or wireless telecommunication networks, each such network comprising exchange equipment arranged for establishing a communication link between a calling and called party by processing signalling information provided, and charging means for charging the call in accordance with the processed signalling information, characterized in that the charging means are arranged for providing charging rates applicable at the time of and for using such system resources required for establishing the call and for charging the call following one of the applicable charging rates.

Following the invention, the charging means may be arranged for charging the least expensive rate applicable and/or for applying the applicable charging rate dependent on a charging rate right of one or both parties involved in a call.

According to the invention, the exchange equipment of the telecommunications system may be arranged for establishing a communication link following the charging rate to be applied. That is, the communication link is set up from or using those system resources which are associated with the selected charging rate.

In modern Intelligent Network (IN) telecommunication systems comprising configurations of Service Switching Point (SSP) and Service Control Point (SCP) equipment, the SSP equipment advantageously is provided with charging means.

The invention further relates to SCP equipment and telecommunication terminal equipment arranged for the charging of calls following the invention.

The above mentioned features and advantages of the invention are illustrated in the following description with reference to the enclosed drawings.

### Brief Description of the Drawings

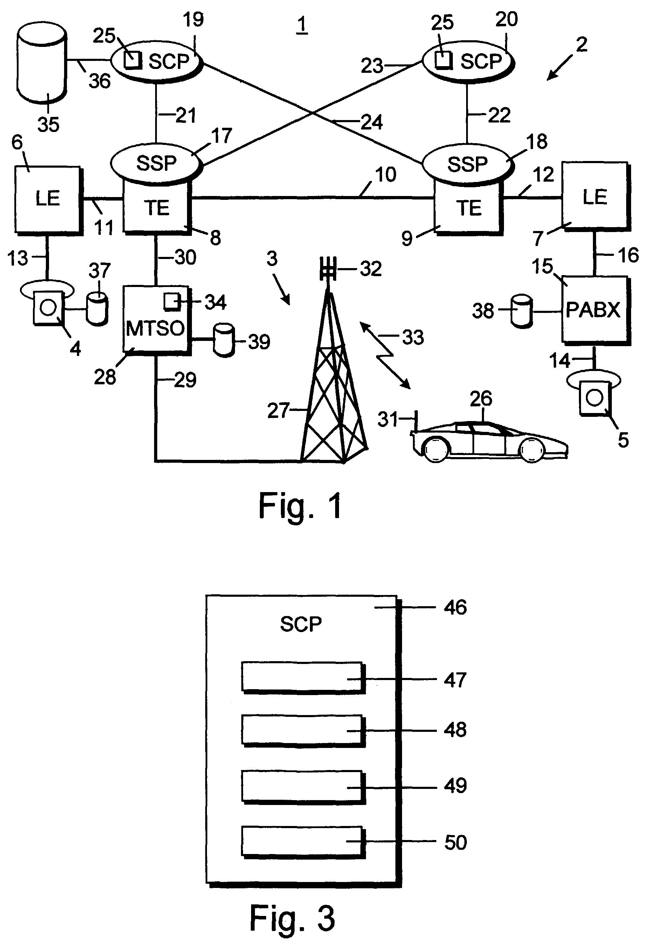

Figure 1 shows a simplified block diagram of a telecommunications system providing wired and/or wireless telecommunication services, incorporating the method according to the present invention.
Figure 2 shows a simplified flow chart diagram of the method according to the present invention.
Figure 3 shows a simplified block diagram of SCP equipment arranged for use in a system according to the present invention.

### Detailed Description of the Embodiments

The invention will now be disclosed in a so-called Intelligent Network (IN) telecommunications system 1 comprising a wired telecommunications network 2 such as the Public Switching Telecommunication Network (PSTN) or the Integrated Services Digital Network (ISDN) and a cellular mobile telecommunications network 3, such as the Global System for Mobile communication (GSM). For clarification purposes, only a single mobile telecommunications network has been disclosed. In practice, several different operators may provide mobile communication services to users in the same geographical area. Likewise, several wired network operators may provide telecommunications services to users in the same region or country, for example.

Subscribers or users 4, 5 connect, through a Local Exchange (LE) 6, 7, to at least one Trunk Exchange (TE) 8, 9, respectively. The TE 8, 9 connected by a trunk line 10. The LE 6 and TE 8 connect by a trunk line 11 and the LE 7 and TE 9 connect by a trunk line 12. Subscriber 4 connects to LE 6 by a subscriber or drop line 13. Subscriber 5 connects via a drop line 14 to a Private Automatic Branch eXchange (PABX) 15, which, in turn, connects to LE 7 by a trunk or drop line 16.

For clarification purposes, single subscribers 4, 5 have been shown. In practice, a plurality of subscribers may connect to an LE 6, 7 and/or the PABX 15.

In the embodiment shown, the TE 8, 9 are of the type comprising SSP equipment 16, 17, respectively. The SSP 16, 17 control the associated TE (8, 9) in order to establish the required transmission links for exchanging calls by the subscribers 4, 5, i.e. the PABX 15.

To each of the SSP 17, 18 Service Control Point (SCP) equipment is configured, i.e. SCP 19, 20 respectively. The SCP operate for controlling telecommunication network services available to the subscribers. In general subscriber 4 is allocated to SCP 19 whereas subscriber 5, i.e. the PABX 15, is allocated to SCP 20. The SSP 17, 18 and the SCP 19, 20 connect to a signalling system or network via signalling links 21, 22, 23, 24 as shown.

Charging of calls can be performed in the LE 6, 7 and/or the SSP 17, 18. For the purpose of the present invention, charging information is provided by the SCP 19, 20 through charging means 25.

The mobile telecommunications network 3 includes one or a plurality of mobile radio stations or units 26 shown in the form of a car, one or more radio base stations 27, illustratively depicted in the form of a transmission tower, and a radio exchange or Mobile Telephone Switching Office (MTSO) 28. The MTSO 28 connects to TE 8 by a trunk line 30.

Each mobile radio unit 26 comprises transceiver means, one end of which is connected to a receive/transmit antenna 31 and another end is connected to a microphone/loudspeaker arrangement for voice communication and/or a data interface, for example. Each base station 27 comprises radio transceiver means, the transceiver output of which is connected to a receive/transmit antenna 32 and provides radio service 33 to a geographically limited region, also called a cell. The radio base station 27 connects to the MTSO 28 by a wire or cable 29. A typical cellular network may comprise hundreds of base stations 27, thousands of mobile stations 26 and more than one MTSO 28. The MTSO 28 provides for radio communication between mobile stations 26 and subscribers of the wired telecommunications network 2. Further, the MTSO 28 comprises charging means 34, illustratively depicted as a block.

In accordance with the present invention, the charging means 25 and, if applicable, 34 are arranged for providing charging rates applicable to a call using network resources, i.e. network equipment and/or network operators at the respective time of the day.

This charging information may be retrieved from already available so-called "charging engines", or through a separate node or data base equipment 35 which connect to the SCP 19 via a signalling link 36 of the signalling network. For the purpose of the present invention, it is assumed that the MTSO 28 also connects to the signalling network 21, 22, 23, 24 of the telecommunications system 1 (not shown).

The data base equipment 35, for call charging purposes, may be provided centrally for the telecommunication system 1 as a whole or in a decentralized fashion, for example such that each telecommunications system provider or network operator operates and maintains his own charging data base equipment 35. Further, call charging rate information may be supplied from data base means associated with the users or subscribers 4, 5 i.e. the PABX 15, schematically indicated by reference numerals 37, 38. The data base equipment 37, 38 may comprise, for example, charging information relating to special subscriptions and the like.

Following prior art charging, the call charging rate is dependent on the distance between the subscribers. Subscribers connected to the same LE, for example, will experience a lower call charging rate per time unit compared to calls between subscribers via intermediate TE and/or international or global carriers. Further, charging may be dependent on basic and supplementary services used by subscribers.

For charging purposes, either tariff information is exchanged or tariff indicators from which the tariff information is constructed. This, whether or not in association with so-called charging analysis tables in the LE 6, 7 or SSP 17, 18 and the charging means 25.

In the mobile telecommunications network 3, charging between mobile units 26 is accounted by the charging means 34. In the case of a call from a wired subscriber 4 to a mobile radio unit 26, calls are charged at the account of the subscriber 4 through the charging means 25 of the SCP 19 to which the subscriber 4 is associated, and the LE 6 or SSP 17, if applicable. For the purpose of providing charging information, the MTSO 28 likewise may be provided with charging data base equipment 39.

According to the invention, once the applicable charges have been acquired by the charging means, a particular charging rate can be selected, for example in accordance with a so-called charging rate right provided to a subscriber. Information as to such a charging rate right may be stored in the charging means 25, 34 and/or the charging data base equipment 37, 38, 39, for example.

The charging rate rights may be applied, such that the system operator or communications service provider always guarantees charging at the least expensive charging rate compared to other network operators or service providers, or even the least expensive charging rate at all. That is, also taking into account special subscriptions, the time of the day (busy hour/off-busy hour tariff), etc. Those skilled in the art will appreciate that the present invention provides a very flexible tool to network operators or telecommunications service providers in order to proivide their customers with the most profitable call charges, such to prevent subscribers from changing network operator or even to stimulate higher traffic volumes.

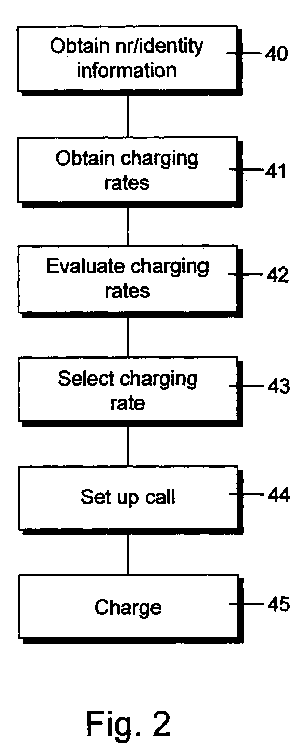

Figure 2 shows, in the form of a flow chart diagram, the method according to the invention. The direction of flow is assumed from the top of the diagram to the bottom.

Block 40 indicates obtaining call number or identity information of the calling party and the destination of the call, i.e. the called party, from the subscriber number provided by the calling party. Generally this information is transmitted, through the signalling network, to the charging means associated with the calling party.

The identity information provided is processed in order to obtain applicable charging rates, as indicated by block 41.

As disclosed above, the charging information can be retrieved from charging analysis tables in an SSP/SCP, from separate charging data base means 35 of the telecommunications system 1 or the several network operators and telecommunication service providers, as well as from charging data base equipment 37, 38, 39 associated with subscribers of the telecommunications system 1.

Following the invention, such charging information is obtained which applies to calls involving the same network or system resources and the time of the day. That is, for a call between wired subscribers involving international or global carriers, charging rates will be retrieved for calls between wired subscribers from the same place of origin and destination, i.e. involving international and/or global carriers. Such as call charging rates provided by several operators and/or carriers.

In the case of a call from a wired subscriber to a wireless subscriber, call charging information relating to calls from a wired subscriber to a wireless subscriber will be obtained. Of course, applicable to the time of the day.

The thus retrieved call rate information is evaluated and compared by the relevant charging means, as indicated by block 42. Next, a charging rate is selected, block 43, in accordance with charging rate rights of the parties involved or, if implemented, the least expensive charging rate applicable. The charging rate right information may be obtained from the charging means or SCP equipment to which the calling and called parties are associated. However, this information may also be stored in the system charging data base equipment 35, for example.

Dependent on the implementation of the method according to the invention, the call can be set up following normal routines, with appropriate charging in accordance with the selected charging rate. However, the call may also be set up using the system resources associated with the selected call charging rate. That is, the call can be set up from the called party instead of the calling party whenever the charging rate for a call from the called party is lower than the charging rate from the original calling party, for example. Call set up is schematically indicated by block 44 in figure 2.

The call will be charged, block 45, in accordance with the selected charging rate, i.e. block 43, either to the calling party or the called party, dependent on the charging rate right, for example. It will be appreciated by those skilled in the art, that a variety of charging possibilities can be applied within the scope of the present invention.

The method according to the invention can be implemented in hardware as well as in software, for example taking advantage of existing services such as collect-call.

Figure 3 shows a typical SCP 46 for use with the present invention.

Block 47 indicates the existing equipment of an SCP for the purpose of providing services to users of the telecommunications system. Block 48 represents charging means, i.e. a charging engine arranged in accordance with the invention. Block 49 denotes storage means for storing charging rate rights of subscribers, whereas block 50 represents processing means for processing the applicable call charging rates in accordance with the charging rate rights 49, if applicable.

The invention is, of course, not limited to the embodiment of a telecommunications system shown and described above. Various modifications and additions can be made to the invention by persons skilled in the art without applying inventive skills and within the scope of the invention as defined in the attached claims.

## Claims

1. A method of charging calls in a telecommunications system providing wired and/or wireless telecommunication services, wherein signalling information is provided identifying a calling and called party, and wherein said signalling information is processed for call charging purposes, characterized in that said signalling information is processed for charging rates applicable at the time of and using such system resources required for establishing said call, and wherein said call is charged following one of said applicable charging rates.

2. A method according to claim 1, wherein said call is charged by applying the least expensive charging rate applicable.

3. A method according to claim 1, wherein a user of said telecommunications system is provided with a charging rate right, and wherein said call is charged by applying a charging rate selected in accordance with said charging rate right.

4. A method according to any of the previous claims, wherein said call is established using the system resources corresponding to the charging rate to be applied.

5. A method according to any of the previous claims, wherein said charging rates are available from charging data base equipment of said telecommunications system.

6. A method according to any of the previous claims, wherein said charging rates, at least partly, are available from charging data base equipment of one or both the calling and called party.

7. A method according to any of the previous claims, wherein said signalling information is processed for charging rates using signalling and processing resources provided by said telecommunications system.

8. A method according to any of the previous claims, wherein said call is set up after selection of the charging rate to be applied.

9. A telecommunications system, comprising wired and/or wireless telecommunication networks, each such network comprising exchange equipment arranged for establishing a communication link between a calling and called party by processing signalling information provided, and charging means for charging said call in accordance with said processed signalling information, characterized in that said charging means are arranged for providing charging rates applicable at the time of and for using such system resources required for establishing said call and for charging said call following one of said applicable charging rates.

10. A telecommunications system according to claim 9, wherein said charging means are arranged for charging said call according to the least expensive charging rate applicable.

11. A telecommunications system according to claim 9 or 10, further comprising means for storing a charging rate right of a party and selection means coupled to said charging means for selecting a charging rate of said applicable charging rates in accordance with said charging rate right of said party.

12. A telecommunications system according to claim 9, 10 or 11, wherein said exchange equipment is arranged for establishing a communication link between said calling and called party in accordance with the charging rate to be applied.

13. A telecommunications system according to claim 9, 10, 11 or 12, further comprising data base equipment accessible by said charging means and comprising charging rate information associated with the time of and the system resources required for establishing said call.

14. A telecommunications system according to any of the claims 9, 10, 11, 12 or 13, wherein a user of said telecommunications system is provided with charging data base equipment comprising charging rate information accessible by said charging means.

15. A telecommunications system according to any of the claims 9, 10, 11, 12, 13 or 14, wherein said exchange equipment comprises configurations of Service Switching Point (SSP) and Service Control Point (SCP) equipment, wherein said SCP equipment comprises said charging means.

16. Subscriber Control Point (SCP) equipment comprising charging means in accordance with any of the claims 9 - 15.

17. Telecommunications terminal equipment comprising charging data base equipment in accordance with claim 14.
